(19) **Europäisches Patentamt**
**European Patent Office**
**Office européen des brevets**

(11) Veröffentlichungsnummer: **0 359 734 B1**

(12) # EUROPÄISCHE PATENTSCHRIFT

(45) Veröffentlichungstag der Patentschrift:
**13.11.91 Patentblatt 91/46**

(51) Int. Cl.⁵: **B60C 11/00, B60C 3/04**

(21) Anmeldenummer: **89890197.0**

(22) Anmeldetag: **25.07.89**

(54) Fahrzeugluftreifen.

(30) Priorität: **14.09.88 AT 2251/88**

(43) Veröffentlichungstag der Anmeldung:
**21.03.90 Patentblatt 90/12**

(45) Bekanntmachung des Hinweises auf die
Patenterteilung:
**13.11.91 Patentblatt 91/46**

(84) Benannte Vertragsstaaten:
**AT DE FR GB IT LU**

(56) Entgegenhaltungen:
**EP-A- 0 064 172**
**DE-A- 1 810 740**
**DE-A- 2 224 015**
**FR-A- 2 432 945**
**LU-A- 56 561**

(56) Entgegenhaltungen:
**PATENT ABSTRACTS OF JAPAN, Band 9, Nr.
117 (M-381)[1840], 22. Mai 1985; & JP-A-60
4405 (YOKOHAMA GOMU K.K.) 10-01-1985**
**PATENT ABSTRACTS OF JAPAN, Band 10, Nr.
100 (M-470)[2157], 16. April 1986; & JP-A-60 234
008 (SUMITOMO GOMU KOGYO K.K.) 20-
11-1985**

(73) Patentinhaber: **Semperit Reifen
Aktiengesellschaft
Wienersdorferstrasse 20-24
A-2514 Traiskirchen (AT)**

(72) Erfinder: **Stumpf, Horst, Dipl.-Ing.
Am Föhrenhang Nr. 817
A-2551 Enzesfeld (AT)**

(74) Vertreter: **Vinazzer, Edith
Semperit Reifen Aktiengesellschaft
Patentabteilung Wienersdorferstrasse 20-24
A-2514 Traiskirchen (AT)**

## Beschreibung

Die Erfindung betrifft einen Fahrzeugluftreifen mit einem profilierten Laufflächenteil, an diesen anschließenden Seitenwänden, einem Gürtelverband sowie einer Radialkarkasse, deren freie Endbereiche durch Umschlingen von Wulstkernen oder dergleichen in den Seitenwänden gehalten sind, wobei die Schulterbereiche eine abgeflachte, im Querschnitt im wesentlichen geradlinige Außenkontur aufweisen. Ein derartiger, dem Oberbegriff des Anspruchs 1 entsprechender Reifen ist z.B. aus der DE-A-2224015 bekannt.

Bei Entwicklungen von Fahrzeugreifen wird in zunehmendem Ausmaß auf das von den Reifen im Fahrbetrieb emittierte Geräusch, insbesondere auf eine Minimierung desselben, geachtet. So sollen nicht nur die Vorbeifahrgeräusche sondern auch die im Fahrzeuginneren wahrnehmbaren Geräusche immer weiter herabgesetzt werden können. Es ist bekannt, daß in diesem Zusammenhang der Profilgestaltung eines Fahrzeugluftreifens eine gewisse Bedeutung zukommt, doch hat es sich gezeigt, daß auch der Gesamtaufbau, insbesondere die Querschnittsgestalt eines Reifens, hohen Einfluß auf die Geräuschemission während des Fahrbetriebes hat. Die diesbezüglich bisher bekannten Maßnahmen zeigen jedoch häufig negative Auswirkungen auf den Fahrkomfort.

Die Erfindung hat sich nun die Aufgabe gestellt, Maßnahmen bei der Gestaltung des Querschnittes eines Fahrzeugluftreifens der eingangs genannten Art zu setzen, durch die die Geräuschemission wesentlich herabgesetzt werden kann, wobei gleichzeitig gute Fahr- und Komforteigenschaften zumindest beibehalten werden sollen.

Gelöst wird die gestellte Aufgabe erfindungsgemäß durch die Merkmale des Anspruchs 1.

Durch eine derart ausgeführte Seitenwand können die während des Fahrbetriebes auftretenden Seitenwandschwingungen weitgehend gedämpft werden. Hierbei können die bei Fahrzeugluftreifen herkömmlicher Bauart im Querschnitt runden Schulterbereiche nicht beibehalten werden, da dadurch Seitenwandschwingungen auf den Laufflächenbereich vermehrt übertragen würden. Die in den Schulterbereichen abgeflachten Bereiche der Seitenwände verhindern nun weitgehend eine Übertragung von Seitenwandschwingungen auf den Laufflächenbereich, was sich günstig auf eine niedrige Geräuschemission im Fahrbetrieb auswirkt. Die abgeflachten Schulterbereiche tragen auch wesentlich dazu bei, dem Reifen ein optimales Einfederungsverhalten und damit einen guten Fahrkomfort zu verleihen.

Bevorzugt ist weiters der zwischen der neutralen Faser der Karkasse und der neutralen Faser des Gürtelverbandes am Gürtelrand gebildete Anschmiegwinkel ≤ 15°, vorzugsweise ≤ 10°. Der somit sehr kleine Anschmiegwinkel unterstützt nicht nur die angestrebte Separation von Schwingungen in den Seitenwänden zu Schwingungen im Gürtelverband, sondern wirkt sich zusätzlich besonders günstig auf den Fahrkomfort aus.

In diesem Zusammenhang ist es auch von Vorteil, wenn die neutrale Faser der Karkasse, im Querschnitt betrachtet, geradlinig bzw. nahezu geradlinig vom Kernbereich bis bzw. nahezu bis zur Stelle mit der maximalen Querschnittsbreite verläuft.

Auch unter Belastung bleiben die durch die Erfindung erzielbaren Vorteile erhalten. Hierbei befindet sich die maximale Querschnittsbreite $B'_{max}$ in einer Höhe $H_B'$ befindet, die zumindest $R_F + \dfrac{H'}{2}$, vorzugsweise etwa $R_F + \dfrac{2}{3} H'$, entspricht, wobei $R_F$ der nominelle Felgenradius und $H'$ die maximale Querschnittshöhe im belasteten Zustand sind.

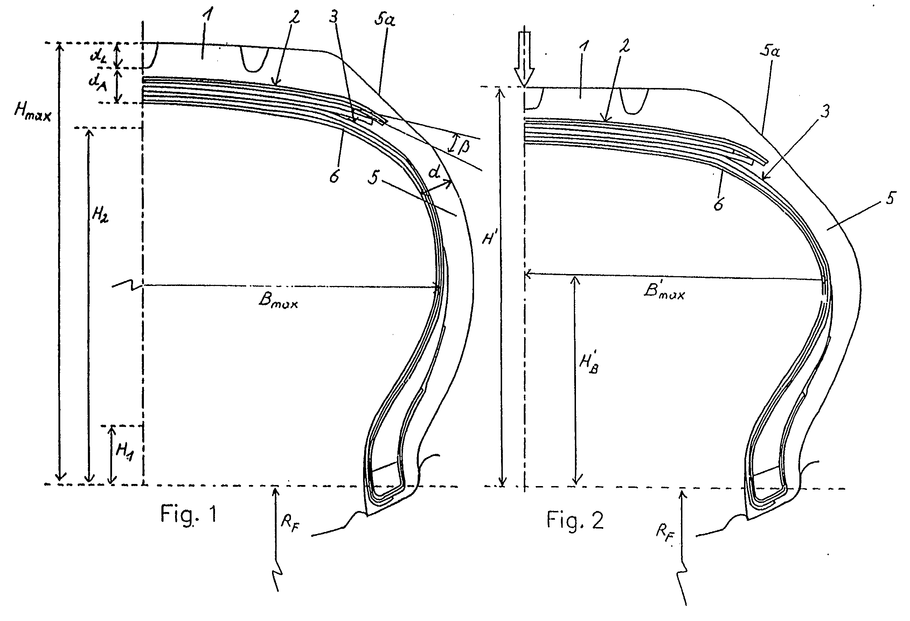

Weitere Merkmale, Vorteile und Einzelheiten der Erfindung werden nun anhand der Zeichnung, die ein Ausführungsbeispiel des erfindungsgemäßen Fahrzeugluftreifens darstellt, näher beschrieben. Hierbei zeigen : Fig. 1 einen Querschnitt durch einen unbelasteten, jedoch mit Innendruck versehenen, auf eine Felge (schematisch dargestellt) aufgezogenen Fahrzeugluftreifen und Fig. 2 diesen Reifen unter Belastung ebenfalls im Querschnitt.

Der Fahrzeugluftreifen weist einen Laufflächenteil 1, einen Gürtelverband 2 sowie eine Radialkarkasse 3 auf, die in an sich bekannter Weise durch Umschlingen von Wulstkernen 4 verankert ist. An den Laufflächenteil 1 schließen beidseitig Seitenwände 5 an. Axial innerhalb des Gürtelverbandes 2 und der Karkasse 3 ist weiters noch die Innenplatte 6 als gesonderter Reifenbauteil dargestellt.

Etwa von der Stelle mit der maximalen Querschnittsbreite $B_{max}$ bis zum Wulstbereich verläuft die Karkasse 3 im Querschnitt im wesentlichen ohne Krümmung. Der zwischen der neutralen Faser des Gürtelverbandes 2 und der neutralen Faser der Karkasse 3 gebildete Winkel β ist sehr klein gewählt und beträgt höchstens 15°, wird jedoch bevorzugt kleiner als 10° gewählt.

Im abgeplatteten bzw. belasteten Zustand gemäß Fig. 2 verringert sich dieser Winkel auf einen Winkel, der geringfügig kleiner ist als β. Erwähnt sei, daß unter dem Begriff "neutrale Faser" jener Bereich im Gürtel-bzw. Karkassverlauf zu verstehen ist, wo keinerlei Spannungen auftreten. Der klein gewählte Winkel β unterstützt eine Separation der während des Fahrbetriebes in den Seitenwänden 5 erzeugten Schwingungen von jenen im Gürtelverband 2 auftretenden Schwingungen.

Die Seitenwände 5 weisen eine Querschnittsdicke d auf, die im wesentlichen zumindest der Gesamtdicke $d_A$ der Reifenbauteile im Äquator, ohne Berücksichtigung der Dessintiefe $d_L$ des Laufflächenteiles 1, entspricht. Die Mindestdicke der Seitenwände 5 beträgt an keiner Stelle weniger als $d_A$ − 10% $d_A$. Im vorliegenden Ausführungsbeispiel umfaßt die Dicke $d_A$ im wesentlichen die Dicken von Gürtelverband 2, Karkasse 3 und Innenplatte 6. Die Querschnittsdicke d der Seitenwände 5 kann in einem Bereich konstant bzw. nahezu konstant gewählt werden. Dieser Bereich wird durch zwei Querschnittshöhen $H_1$ und $H_2$ bestimmt, die jeweils von einem axialen Endpunkt des nominellen Felgenradius $R_F$ aus gemessen werden. Hiebei ist $H_2 \leq$ 80% $H_{max}$ und $H_1 \geq$ 10% $H_{max}$, wobei $H_{max}$ die maximale Querschnittshöhe, ebenfalls von einem Endpunkt des Felgenradius $R_F$ gemessen, ist. Innerhalb des durch die beiden Querschnittshöhen $H_1$ und $H_2$ bestimmten Bereiches ist jede Seitenwand 5 bevorzugt zu mindestens einem Drittel ihrer dort verlaufenden Länge mit konstanter bzw. nahezu konstanter Dicke ausgeführt.

Zusätzlich sind die Schulterbereiche 5a, die den Übergangsbereich der Seitenwände 5 zum Laufflächenteil 1 darstellen, mit einer abgeflachten Außenkontur versehen. Diese Abflachungen sind von der ansonsten kontinuierlichen Außenkontur der Seitenwände 5 etwas abgesetzt. Im Querschnitt betrachtet weisen daher die Schulterbereiche 5a eine geradlinige bzw. nahezu geradlinige Außenkontur auf. Diese Maßnahme trägt dazu bei, im Fahrbetrieb Übertragungen von Seitenwandschwingungen auf den Laufflächenbereich gering zu halten und wirkt sich günstig auf das Einfederungsverhalten des Reifens aus.

Wie aus Fig. 2 ersichtlich ist, bleiben die durch die erfindungsgemäße Querschnittsgestaltung erzielbaren Vorteile auch im belasteten Zustand des Reifens voll erhalten. Die maximale Querschnittsbreite $B'_{max}$ befindet sich hiebei in einer Höhe $H'_B > R_F + \dfrac{H'}{2}$, vorzugsweise etwa $R_F + \dfrac{2}{3}$ $H'$, wobei $H'$ die maximale Querschnittshöhe im belasteten Zustand ist.

## Patentansprüche

1. Fahrzeugluftreifen mit einem profilierten Laufflächenteil, an diesen anschließenden Seitenwänden, einem Gürtelverband sowie einer Radialkarkasse, deren freie Endbereiche durch Umschlingen von Wulstkernen oder dgl. in den Seitenwänden gehalten sind wobei die Schulterbereiche (5a) eine abgeflachte, im Querschnitt im wesentlichen geradlinige Außenkontur aufweisen, dadurch gekennzeichnet, daß die Seitenwände (5) eine Querschnittsdicke (d) aufweisen, die an keiner Stelle die Querschnittsdicke ($d_A$) des Reifens im Äquator, die dem Abstand vom Nutgrund bis zur Innenseite des Reifens entspricht, um mehr als 10% unterschreitet, wobei innerhalb eines durch zwei jeweils von einem Endpunkt des nominellen Felgenradius $R_F$ aus gemessenen Querschnittshöhen $H_1$ und $H_2$ bestimmten Bereiches zumindest ein Drittel der durch die Differenz $H_2 − H_1$ definierten Länge jeder Seitenwand (5) eine im wesentlichen konstante Querschnittsdicke (d) aufweist, wobei $H_2$ 80% und $H_1$ 10% der maximalen Querschnittshöhe $H_{max}$ ist.

2. Fahrzeugluftreifen nach A1, dadurch gekennzeichnet, daß, bei montiertem und unter Innendruck gesetztem Reifen betrachtet, der zwischen der neutralen Faser der Karkasse (3) und der neutralen Faser des Gürtelverbandes (2) am Gürtelrand gebildete Anschmiegwinkel $\beta \leq$ 15°, vorzugsweise $\leq$ 10° ist.

3. Fahrzeugluftreifen nach Anspruch 1 oder 2, dadurch gekennzeichnet, daß die neutrale Faser der Karkasse (3), im Querschnitt betrachtet, geradlinig bzw. nahezu geradlinig vom Wulstkernbereich bis bzw. nahezu bis zur Stell mit der maximalen Querschnittsbreite $B_{max}$ verläuft.

4. Fahrzeugluftreifen nach einem der Ansprüche 1 bis 3, dadurch gekennzeichnet, daß bei montiertem, unter Innendruck gesetztem, jedoch belastetem Reifen betrachtet, sich die maximale Querschnittsbreite $B'_{max}$ in einer Höhe $H'_B$ befindet, die zumindest $R_F + \dfrac{H'}{2}$, vorzugsweise etwa $R_F + \dfrac{2}{3} H'$, entspricht, wobei $R_F$ der nominelle Felgenradius und $H'$ die maximale Querschnittshöhe im belasteten Zustand sind.

## Claims

1. A vehicle pneumatic tyre comprising a profiled tread area, side walls adjoining said tread area, a belt unit, and a radial carcass, the free end zones of which are held in the side walls in that they are encircled by bead cores or the like, wherein the shoulder zones (5a) possess a flattened outer contour which is substantially rectilinear in cross-section, characterized in that the side walls (5) possess a cross-sectional thickness (d) which at no point falls below, by more than 10% the cross-sectional thickness ($d_A$) of the tyre at the equator, which cross-sectional thickness ($d_A$) corresponds to the distance from the base of the groove to the inside of the tyre, wherein, within a zone defined by two cross-sectional heights $H_1$ and $H_2$, each measured from an end point of the nominal rim radius $R_F$, at least one third of the length, defined by the difference $H_2 − H_1$, of each side wall (5) possesses a substantially constant cross-sectional thickness (d), where $H_2$ is 80% and $H_1$ is 10% of the maximum cross-sectional height $H_{max}$.

2. A vehicle pneumatic tyre as claimed in Claim 1, characterised in that when the tyre has been mounted and internally pressurized, the contact angle a, formed between the neutral fibre of the carcass (3) and the neutral fibre of the belt unit (2) at the edge of the belt, is $\leq$ 15° preferably $\leq$ 10°.

3. A vehicle pneumatic tyre as claimed in Claim 1 or 2, characterised in that the neutral fibre of the carcass (3), considered in cross-section, extends rectilinearly or approximately rectilinearly from the bead core zone up to or virtually up to the point of the maximum cross-sectional width $B_{max}$.

4. A vehicle pneumatic tyre as claimed in one of Claims 1 to 3, characterised in that when the tyre is mounted, internally pressurized yet loaded, the maximum cross-sectional width $B'_{max}$ occurs at a height $H'_B$ which at least corresponds to $R_F + \dfrac{H'}{2}$, preferably approximately $R_F + \dfrac{2}{3}H'$, where $R_F$ is the nominal rim radius an $H'$ is the maximum cross-sectional height in the loaded state.

**Revendications**

1. Bandage pneumatique pour véhicules, comprenant une surface de roulement profilée, des parois latérales qui s'y raccordent, une ceinture composite ainsi qu'une carcasse radiale, dont les régions d'extrémité libres sont maintenues dans les parois latérales définies par la différence $H_2 - H_1$ par des tringles de talon ou analogues repliées en boucles, les régions d'épaulement (5a) présentant un contour extérieur aplati et essentiellement rectiligne en section, caractérisé en ce que les parois latérales (5) ont une épaisseur en coupe (d) qui n'est en aucun endroit inférieure à 10% à l'épaisseur en coupe ($d_A$) du pneumatique à l'équateur, qui correspond à la distance entre le fond des sculptures et le côté interne du pneumatique, moyennant quoi, à l'intérieur d'une région déterminée par respectivement deux hauteurs en section $H_1$ et $H_2$ mesurées à partir d'un point d'extrémité du rayon nominal $R_F$ de la jante, au moins un tiers de la longueur de chaque paroi latérale (5) définie par la différence $H_2 - H_1$ a une épaisseur en section (d) qui est sensiblement constante, $H_2$ représentant 80% et $H_1$ 10% de la hauteur maximale en section $H_{max}$.

2. Bandage pneumatique pour véhicules selon la revendication 1, caractérisé en ce que, lorsque le pneumatique est monté et gonflé, l'angle inclus $\beta$ entre la fibre neutre de la carcasse (3) et la fibre neutre de la ceinture composite (2) sur le bord de la ceinture est $\leq$ 15°, et de préférence $\leq$ 10°.

3. Bandage pneumatique pour véhicules selon la revendication 1 ou 2, caractérisé en ce que la fibre neutre de la carcasse (3), vue en section, est rectiligne ou pratiquement rectiligne depuis la région des tringles de talon jusqu'à pratiquement l'emplacement de largeur maximale en section $B_{max}$.

4. Bandage pneumatique pour véhicules selon l'une quelconque des revendications 1 à 3, caractérisé en ce que, lorsque le pneumatique est monté, gonflé mais chargé, la largeur maximale en section $B'_{max}$ se trouve à une hauteur $H'_B$ qui correspond au moins à $R_F + H'/2$, et de préférence à environ à $R_F + 2/3\ H'$, $R_F$ représentant le rayon nominal de la jante et $H'$ la hauteur maximale en section à l'état chargé.

Fig. 1

Fig. 2

EP 0 359 734 B1